# EUROPEAN PATENT APPLICATION

(11) **EP 1 486 684 A2**
(43) Date of publication of application: **15.12.2004**
(21) Application number: 04076625.5
(22) Date of filing: 03.06.2004
(51) Int. Cl.: F16B 21/20, F16B 37/08

(54) **Device for mounting an object on a shaft end**

(30) Priority: 13.06.2003 NL 1023655
(71) Applicant: de Jong, Freddy, 9341 AV Veenhuizen (NL)
(72) Inventor: de Jong, Freddy, 9341 AV Veenhuizen (NL)

(57) **Abstract**

The invention relates to a device for mounting an object on a threadless end of a smooth shaft or a damaged threaded end, which device is constructed of a clamping bush (1) with flange (2) and turisted nut (3), in which the clamping bush (1) is provided with a screw thread (12) on the outside, of which the diameter increases towards the middle of the screw thread on the clamping bush (1), in which the clamping bush (1) has an internal opening of which the diameter also increases towards the middle of the clamping bush (1), in which the clamping bush (1) is provided with tooth-shaped grooves (13) at the place of the largest internal diameter, in which the clamping bush (1) is provided with a hexagonal head (11) on one side that precisely fits in a hexagonal opening (21) of the flange (2), in which the flange (2) is provided with a number of wrench surfaces on the outer circumference, and a turisted nut (3) which is provided with a screw thread (32) on the inside, which screw thread is adjusted and fits on the external screw thread (12) of the clamping bush (1), in which the screw thread (32) inside the nut (3) on the side directed towards the clamping bush (1) somewhat increases in diameter over a limited number of turns of the screw thread (32).

## Description

The present invention relates to a device for mounting an object on a threadless end of a smooth shaft or on a damaged threaded end, in which the device is constructed of a clamping bush with flange and turisted nut, which on the outside of the clamping bush is provided with a screw thread of which the diameter increases towards the middle of the screw thread on the clamping bush, in which the clamping bush has an internal opening of which the diameter also increases towards the middle of the clamping bush, which clamping bush is provided with a number of tooth shaped grooves located at the largest internal diameter on the inside, in which the clamping bush is provided with a hexagonal head on one side that precisely fits in a hexagonal opening of the flange, in which the flange is provided with a number of wrench surfaces on the circumference, and a turisted nut which is provided with a screw thread on the inside, which screw thread is adjusted and fits on the external thread of the clamping bush, which screw thread in the nut on the side facing the clamping bush enlarges slightly in diameter in a limited amount of turns of the screw thread.

A threadless bolt with nut connection is known from the American patent document number US2002168246. Here, it also concerns an intermediate object in the form of a profiled coil spring. However, with this facility, existing connection problems cannot be solved and no objects can be mounted on smooth shafts. Also, tapered as well as conically shaped surfaces are used as a result of which the clamping zone of the bolt and nut is limited. The mentioned disadvantages do not occur with the present invention.

It is the aim of the present invention to provide a device that can freely be used on damaged thread ends without the necessity that new threads have to be cut on the damaged thread ends. The device can also be used on the end of a smooth shaft without screw thread.

The preferred construction according to invention will be described by way of example, and with reference to the accompanying drawing. However, these drawings do not limit the scope of the invention, but only show several possible embodiments:
In which:
- Fig. 1: shows an exploded view of the demounted components of the device, being a clamping bush, a flange and a turisted nut;
- Fig. 2: shows a cross-section of the demounted components of the device in figure 1;
- Fig. 3: shows the device from figures 1 and 2 in which the flange is slided over the head of the clamping bush and in which the turisted nut is brought onto the clamping bush by turning so far that clamping is not just achieved yet;
- Fig. 4: shows the device from figures 1 and 2 in which the turisted nut is turned over the clamping bush so that clamping on the shaft is being achieved;
- Fig. 5: shows the device from figure 4 in which the turisted nut is turned a little further turned over the clamping bush so that the flange of the clamping bush is pressed against an object to be fastened;
- Fig. 6: shows a possible variant to the embodiment of the coupling between the clamping bush and flange;
- Fig. 7: shows a possible variant in which the clamping bush and flange are joint together to one whole;
- Fig. 8: shows a cross-section of the variant in figure 7 in the final mounted position;
- Fig. 9: shows a variant on the taper of the inside of the clamping bush with several cuts and serrated-shaped grooves: and
- Fig. 10: finally shows an axial view of the clamping bush with tangentially sawn or engraved axial cuts.

The device according to the invention consists of a combination of a clamping bush (1) with a flange (2) and a turisted nut (3). The clamping bush (1) has a hexagonal head (11) on one side, which head (11) fits tightly in the hexagonal opening (21) of the flange (2). The clamping bush (1) is provided with a screw thread (12) on the outside, in which the diameter of the screw thread (12) from the beginning and the end of the clamping bush (1) increases towards the middle of the clamping bush (1) from a diameter (D) to a larger diameter (D'). The diameter (d) of the internal opening of the clamping bush (1) also increases towards the middle of the clamping bush (1) from (d) to (d'). Tooth-shaped grooves (13) are applied at the position of the larger internal diameter (d'), which grooves have such dimensions that they do not obstruct the free passage of the clamping bush (1) with a diameter (d), so that the clamping bush (1) can be slided freely over a shaft or damaged threaded end, with a diameter that is a fraction smaller than the internal diameter (d) of the clamping bush (1). Further, in the screw thread part (12) of the clamping bush (1) a number of axial cuts (14) are sawn or engraved.

The turisted nut (3) of the device is provided with a screw thread (32) on the cylindrical internal side of the turisted nut (3) that fits in the screw thread (12) with diameter (D) at the beginning of the clamping bush (1) with the smallest external diameter (D) of clamping bush (1). The diameter of the screw thread (32) of the turisted nut (3) slightly increases towards the end (33) of the turisted nut (3) which is turned onto the clamping bush (1) until diameter (D'), so that the increasing diameter of the clamping bush (1), whilst tightening the turisted nut (3) onto the clamping bush (1), is slightly decreased until a smaller diameter (D) of the screw thread (32) of the turisted nut (3) without the screw thread (32) of the turisted nut (3) getting jammed in the screw thread (12) of the clamping bush (1).

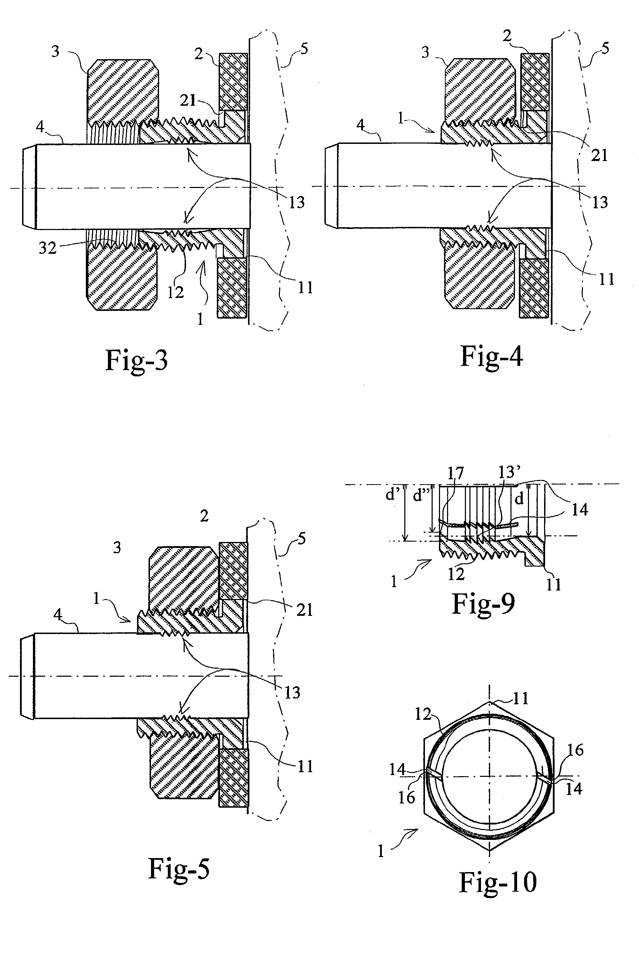

The working of the device, shortly indicated in the figures 3, 4 and 5, is as follows: from a collection of clamping bushes with different internal diameters, the clamping bush (1) is selected which fits as precisely as possible around the shaft of the damaged threaded end (4), not too tight nor too loose. The flange (2) accompanying the clamping bush (1) is slided with the opening (21) on the head (11) of the clamping bush and the accompanying turisted nut (3) is manually screwed with the largest opening with diameter (D') onto the beginning of the clamping bush (1) with diameter (D). Following, the device constructed this way, is positioned as close as possible against the shaft end or the damaged threaded end (4) of the object (5) to be tightened, also see figure 3. With a well fitting flat open-end wrench, the flange (2) and the clamping bush (1) are held tight against turning and the turisted nut (3) is screwed onto the clamping bush (1) with a matching wrench, which causes the internal diameter (d') halfway the clamping bush (1) to being decreased to diameter (d). The cuts (14) allow an elastic deformation of the clamping bush (1) under the turisted nut (3). The serrated grooves (13) are herewith pressed into the shaft or the damaged threaded end (4) and the clamping bush (1) is fixed by radial clamping onto the shaft or the damaged threaded end (4). As a result, the clamping bush (1) can not be axially slided onto the shaft or the damaged threaded end (4), also see figure 4. The turisted nut (3) has done its strangling work and can then be turned further over the clamping bush (1) with the result that the turisted nut (3) runs against the flange (2). If now the turisted nut (3) is screwed further onto the clamping bush (1), then the turisted nut (3) will press the flange (2) against the object (5), in which the flange (2) with the opening (21) will slide somewhat over the head (11) of the clamping bush (1). The axial clamping of the object (5) onto the shaft or the damaged threaded end (4) is herewith realised, see also figure 5.

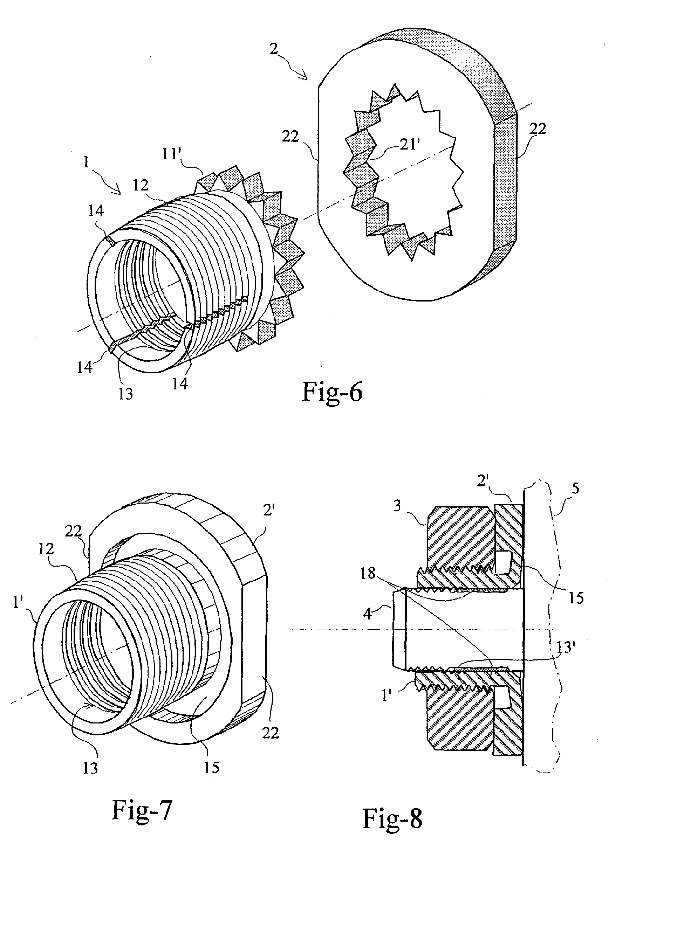

Figure 6 shows a variant of the coupling between the clamping bush (1) and the flange (2), in which the head (11') of the clamping bush (1) consists of a teeth that fits precisely into the teeth opening (21') of the flange (2). Also in figure 6 three, instead of two cuts (14) are applied.

Figure 7 shows a variant in which the clamping bush (1') and flange (2') are joint together to a whole and in which the connection (15) between clamping bush (1) and flange (2') are narrowed in such a way, that this connection (15) allows some axial movement of the flange (2') in relation to the clamping bush (1') by spring action, being plastic deformation of the connection (15) when the turisted nut (3) is turned against it for the axial clamping of the object (5) onto the shaft or the damaged threaded end (4). This variant can be of importance at damaged threaded ends in which the clamping bush with flange made from a softer material than the damaged threaded end can achieve a better radial clamping with the still remaining screw thread on the threaded end without the threaded end being further damaged by penetrating hardened tooth-shaped grooves. In this situation it can also be required that no cuts (14) are used in the screw threaded part of the clamping bush (1).

By setting up a certain series for the device according to the invention, one can think about a series of clamping bushes of which the internal diameters (d) increase with one tenth or two tenths of a millimetre, so that the correct fitting clamping bush can quite easily be selected. The external diameter (D) for the series does not have to be set up with this kind of precision. The external diameter (D) can, for example, increase per millimetre. In this way, at a series increasing by one-tenth of a millimetre, ten clamping bushes and at a series increasing by two-tenths of a millimetre, five clamping bushes (1) with internal diameter (d) varying between, for example, nine and ten millimetre, can all be combined with one flange (2) and one turisted nut (3). The number of turisted nuts (3) and flanges (2) in a set up series is therefore a factor ten respectively five smaller than the matching number of clamping bushes (1).

The device according to the invention is not limited by the shown drawings and the above described embodiments. One can vary in different ways within the scope of this invention, dependant on the intended use.

This way, the invention can be used on smooth whether or not hardened shaft ends and the clamping bush (1) can, as regards material and hardness, be adjusted to that. If the hardness of the clamping bush (1) is a fraction higher than the shaft (4), a reliable and high-quality clamping can be achieved without affecting the quality of the shaft, especially with respect to the notch effect because no screw thread is needed on the shaft. If hardnesses are equal, a clamping is achieved with a deformation (13") as shown in figure 8.

When using the device according to the invention on damaged threaded ends the clamping bush regarding the material and lay-out, can be dimensioned in such a way that the damaged threaded end can still maintain its optimal strength. It is also possible to use a thin-walled lengthwise cut open bush (18) on that specific part of the screw thread which is damaged; then the remaining screw thread does not have to be removed with a file or abrasive wheel, also see figure 8.

The internal tooth-shaped grooves (13) can also be serrated-shaped grooves (13'), as shown in figure 9.

∂D, the difference between the diameters (D') and (D) and ∂d, the difference between the diameters (d') and (d) can freely be chosen within reasonable limits, possibly in combination with the used number of axial cuts (14). Also the shape of the transition from the smaller external diameter (D) to the larger external diameter (D') can be barrel-shaped, spherical, conical-shaped or another applicable shape. Also the transition from the internal diameter (d) to (d') can be chosen freely within reasonable limits. This way, when using several axial cuts (14) one can choose for a sharp serrated shape (17) at the beginning of the clamping bush (1) with a beginning diameter (d") which is a fraction smaller than the diameter of the shaft (4), in which then a springy component is used in the material of the clamping bush (1), see figure 9.

The cuts (14) can be varied in number as well as in length and angle in which they are sawn or engraved within reasonable limits. Figure 10 shows a tangential cut that can lock the turisted nut as well as the clamping bush against loosening by vibration with its sharp edges (16). Of course, also the flange (2) can be provided with locking cuts.

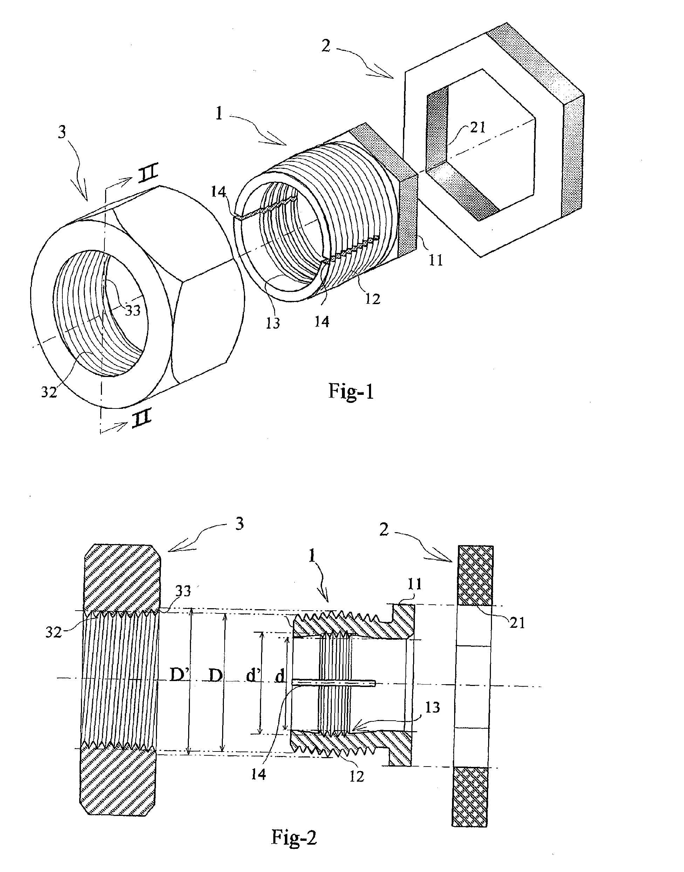

Dissimilar materials can be used for turisted nut, clamping bush and flange, for example a bronze turisted nut in combination with a steel or hardened steel clamping bush and a flange with a copper layer on the object side for an uniformly pressing of the flange onto the object (5). Also the coupling between clamping bush (1) and flange (2) can be adjusted as regards shape and use or dimensions to the intended use, see also figures 1 and 6.

Besides, with the intended use, a preference for a certain screw thread for the external screw thread (12) of the clamping bush (1) and the internal screw thread (32) of the turisted nut (3) can be used, such as fine metric screw thread, gas thread, trapezium-shaped, quadrangular, undulatory-shaped or serrated screw thread. This can be of importance to optimally combine radial turisted power and axial tensile force.

Finally it has to be emphasized, that the above description constitutes preferred embodiments of the invention, but that also other modifications are possible without departing the scope of this patent document.

## Claims

1. Device for mounting an object on a smooth shaft end or a damaged threaded end, **characterized in that**, the device is constructed of a clamping bush with a flange and a turisted nut.

2. Device as claimed in claim 1, **characterized in that**, on the outside of the clamping bush over a part of the length of it, the clamping bush is provided with a screw thread of which the diameter from the ends of the screw thread on the clamping device increases towards the middle of the screw thread on the clamping bush.

3. Device as claimed in claims 1 or 2, **characterized in that**, the clamping bush has an internal opening of which the diameter increases towards the middle of the clamping bush and that the clamping bush is provided with a number of tooth shaped grooves at the largest internal diameter on the inside.

4. Device as claimed in claims 1, 2 or 3, **characterized in that**, the clamping bush is provided with a hexagonal head on the flange side.

5. Device as claimed in claims 1, 2, 3 or 4, **characterized in that**, the flange has a hexagonal opening that fits tightly on the hexagonal head of the clamping bush.

6. Device as claimed in claims 1, 2, 3, 4 or 5, **characterized in that**, the outer circumference of the flange has a hexagonal shape.

7. Device as claimed in claims 1, 2, 3, 4, 5 or 6, **characterized in that**, the turisted nut is provided with a screw thread on the inside which screw thread is adjusted and fits on the external thread of the clamping bush with the smallest diameter, which screw thread in the nut on the side facing the clamping bush enlarges in diameter in a limited amount of turns of the screw thread up to the maximum diameter of the screw thread of the clamping bush.

8. Device as claimed in one of the aforementioned claims, **characterized in that**, the clamping bush is provided with an axial cut running from the side where the outside thread starts over the length of the outside thread.

9. Device as claimed in one of the aforementioned claims, **characterized in that**, the clamping bush is provided with several axial cuts regularly divided over the circumference running from the side where the outside thread starts over the length of the outside thread.

10. Device as claimed in one of the aforementioned claims, **characterized in that**, the clamping bush is provided with a number of serrated-shaped grooves on the outside at the largest internal diameter.

11. Device as claimed in one of the aforementioned claims, **characterized in that**, the clamping bush is provided with multiple teeth at the flange side.

12. Device as claimed in claim 11, **characterized in that**, the flange has an opening with multiple teeth that fits tightly on the head with the multiple teeth of the clamping bush.

13. Device as claimed in one of the aforementioned claims, **characterized in that**, the clamping bush and the flange are joint together to a whole, in which the connection between clamping bush and flange is narrowed in such a way that this connection is elastically or plastically deformable.

14. Device as claimed in one of the aforementioned claims, **characterized in that**, the screw thread used for the outside of the clamping bush and the inside of the turisted nut is an international thread.

15. Device as claimed in one of the aforementioned claims, **characterized in that**, the screw thread used for the outside of the clamping bush and the inside of the turisted nut is a fine metric screw thread.

16. Device as claimed in one of the aforementioned claims, **characterized in that**, the screw thread used for the outside of the clamping bush and the inside of the turisted nut is a gas thread.

17. Device as claimed in one of the aforementioned claims, **characterized in that**, the screw thread used for the outside of the clamping bush and the inside of the turisted nut is has a quadrangular, rectangular, trapezium, serrated or undulatory shaped profile.

18. Device as claimed in one of the aforementioned claims, **characterized in that**, the described shape of the screw thread on the outside of the clamping bush of the diameter on the ends of the screw thread to the large diameter half way of the screw thread has a barrel-shape, a spherical, a composed conical shape or another applicable shape.

19. Device as claimed in one of the aforementioned claims, **characterized in that**, the clamping bush is provided with several axial slots, that the thus formed lips are somewhat springy and that the end of the internal opening is provided with a tooth-shaped profile of which the internal diameter is a fraction smaller than the diameter of the shaft or the threaded end for which the clamping bush is meant.

20. Device as claimed in one of the aforementioned claims, **characterized in that**, the flange has a hexagonal shape of which the dimensions correspond to the dimensions of the hexagonal shape of the turisted nut.

21. Device as claimed in one of the aforementioned claims, **characterized in that**, the flange is a round flange with two wrench surfaces for a flat open-end wrench.

22. Device as claimed in one of the aforementioned claims, **characterized in that**, the clamping bush, the flange and the turisted nut are all made of the same material, whether or not hardeneable.

23. Device as claimed in one of the aforementioned claims, **characterized in that**, the clamping bush, the flange and the turisted nut are not all made of the same material.

24. Device as claimed in one of the aforementioned claims, **characterized in that**, the clamping device is made of a whether or not hardeneable steel, that the turisted nut is made of bronze and that the flange is made of a combination of whether or not hardeneable steel with a copper or other soft metal coating on the side of the object to be clamped.

25. Device as claimed in one of the aforementioned claims, **characterized in that**, the flange is provided with a turisted nut locking profile.
